# FASCICULE DE BREVET EUROPEEN

(11) **EP 2 940 363 B1**
(45) Date de publication et mention de la délivrance du brevet: **15.08.2018**
(21) Numéro de dépôt: 15159977.6
(22) Date de dépôt: 19.03.2015
(51) Int. Cl.: F16L 33/00, F16L 41/08, F16L 47/02, F16L 55/16, F16L 55/17

(54) **DISPOSITIF DE RACCORDEMENT ENTRE L'OUVERTURE D'UN RÉSERVOIR DE FLUIDE ET UN CONDUIT**
ANSCHLUSSVORRICHTUNG ZWISCHEN DER ÖFFNUNG EINES FLÜSSIGKEITSBEHÄLTERS UND EINER LEITUNG
CONNECTION DEVICE BETWEEN THE OPENING OF A FLUID RESERVOIR AND A PIPE

(30) Priorité: 28.04.2014 FR 1453812
(43) Date de publication de la demande: 04.11.2015
(73) Titulaire: PSA Automobiles SA, 78300 Poissy (FR)
(72) Inventeur: Tersou, Sylvain, 78960 VOISINS LE BRETONNEUX (FR)

(56) Documents cités:
- EP-A1- 1 038 714
- EP-A1- 2 236 555
- WO-A1-80/00067
- CH-A- 398 211
- CH-A5- 677 138
- US-A- 2 316 898
- US-A- 3 516 689
- US-A- 4 011 652
- US-A- 5 125 431
- US-A- 5 336 351
- US-A1- 2002 121 517

## Description

L'invention se rapporte à un ensemble comprenant un réservoir de fluide muni d'une ouverture, un conduit et un dispositif de raccordement de ladite ouverture audit conduit.

Elle vise de préférence une application dans le domaine des véhicules terrestres, maritimes ou aériens, et plus particulièrement les véhicules terrestres du type véhicules automobiles.

Elle concerne notamment un réservoir d'un fluide du type carburant (comme de l'essence, de l'éthanol, du diesel) ou du type liquide de traitement (comme de l'urée utilisée pour traiter les NOx contenus dans les gaz d'échappement par injection dans la ligne d'échappement où elle se transforme en ammoniac gazeux).

Un exemple connu est divulgué dans document EP1038714A1.

Il est connu de connecter le réservoir muni d'une ouverture définissant un embout à son conduit par une opération de soudure qui les solidarise définitivement. Par la suite, en après-vente pour rester dans l'exemple du domaine automobile, il peut être nécessaire de les désolidariser, soit parce que le conduit ou le réservoir est endommagé/défectueux et doit être remplacé, soit qu'il soit nécessaire de démonter temporairement l'un ou l'autre pour avoir accès à un autre composant qui est endommagé ou dont le fonctionnement doit être vérifié.

Le but de la présente invention est alors de proposer une conception améliorée de raccordement entre l'ouverture d'un réservoir et son conduit. Il s'agit notamment de concevoir un raccordement qui permette un assemblage, puis des éventuels démontages/remontage faciles de mise en oeuvre.

L'invention a pour objet un ensemble selon la revendication 1, comprenant un réservoir de fluide muni d'une ouverture, un conduit et un dispositif de raccordement de ladite ouverture audit conduit, le dispositif de raccordement comprenant un goulot destiné à être soudé à l'une de ses extrémités à l'ouverture du réservoir et à l'autre extrémité au conduit. Le goulot est muni de deux bagues saillantes sur son pourtour extérieur et est sécable dans une zone dite de découpe située entre les deux bagues.

L'invention propose ainsi un raccordement entre deux composants : -le réservoir d'un côté, par exemple de fluide du type carburant ou urée, - un conduit de l'autre, qui peut être le conduit venant alimenter la sortie du réservoir vers un organe ayant besoin du fluide (moteur, ligne d'échappement dans le cas d'un véhicule automobile). Et ce raccordement n'est pas direct mais se fait via une pièce intermédiaire, ici un goulot. L'avantage de ce goulot est qu'il peut être fabriqué par une autre technique que le réservoir et le conduit (ce qui sera explicité plus loin), et qu'il est fonctionnalisé pour permettre un démontage du réservoir au conduit et un remontage ou un remplacement aisé pour l'opérateur et avec le minimum de composants différents à fabriquer, aussi bien en première monte qu'en deuxième monte (après-vente). Ainsi, ce goulot présente des bagues saillantes dont la fonction se révèle quand on doit séparer le réservoir du conduit, puis les solidariser à nouveau : une fois le goulot coupé entre ses deux bagues, celles-ci bagues saillantes permettent, a posteriori, de disposer et fixer en place un manchon assurant un nouveau raccordement entre les deux composants.

A noter que, de préférence, le goulot est monobloc.

Alternativement, il est en plusieurs parties, notamment deux parties, qui sont assemblées, notamment soudées les unes aux autres. La soudure peut être réalisée lors du montage en première monte, notamment.

Au sens de l'invention, on comprend par « ouverture » du réservoir soit une ouverture au sens strict du terme, qui reste dans le plan de la paroi du réservoir dans la zone où elle est située, soit une ouverture qui est saillante par rapport à ladite paroi et qui constitue un embout.

La zone de découpe est identifiée par marquage. On facilite ainsi l'opération de découpe, en s'assurant que la découpe se fait bien sur le goulot entre ses deux bagues, et, avantageusement, dans la partie médiane du goulot (par rapport à sa longueur).

Les bagues saillantes peuvent être de matière avec le goulot ou être rapportées sur lui. De préférence, elles sont de matière avec le goulot, ce qui simplifie la fabrication du goulot dans son ensemble.

Par exemple, le goulot a une longueur comprise entre 5 et 15 cm. Il est de préférence de section cylindrique avec un diamètre externe compris entre 30 et 60 mm

Par exemple, les bagues saillantes du goulot ont une hauteur minimale d'au moins 0,8 mm, notamment comprise entre 0,8 et 5 mm.

De préférence, le conduit, le réservoir et le goulot sont à base de matériaux polymères, notamment en thermoplastique(s) du type polyoléfine(s), notamment en polyéthylène.

De préférence, le réservoir et le conduit sont à base de matériaux thermoplastiques et obtenus par un moulage par soufflage ou extrusion soufflage, et le goulot est en matériau polymère thermoformable obtenu par un moulage par injection.

C'est avec ces procédés de moulage que la présence du goulot intermédiaire s'avère, par ailleurs, la plus intéressante. En effet, la technique de moulage par soufflage du réservoir et du conduit rend leur raccordement direct difficile, s'il faut séparer les deux composants, car cette technique crée sur les pièces obtenues des plans de joint. Or, en cas de manchonnage, on constate des risques de défaut d'étanchéité et de faiblesse mécanique dans les zones de raccordement par manchon au niveau de ces plans de joint. Interposer un goulot intermédiaire, qui, lui, est injecté et dépourvu de plan de joint permet d'obtenir un raccord plus robuste entre réservoir et conduit.

L'invention a également pour objet un procédé de traitement d'un ensemble comprenant un réservoir muni d'une ouverture et un conduit, ledit conduit et ladite ouverture étant raccordés par un dispositif de raccordement comprenant un goulot soudé à l'une de ses extrémités à l'ouverture du réservoir et à l'autre de ses extrémités au conduit, tel que ledit goulot est muni de deux bagues saillantes sur son pourtour extérieur, ledit goulot étant sécable en deux parties dans une zone dite de découpe située entre les deux bagues saillantes. En vue de remplacer le réservoir ou le conduit ou de remonter le réservoir sur le conduit, après démontage, ledit procédé comprend les étapes suivantes :
- découpe du goulot du dispositif de raccordement dans sa zone de découpe afin de séparer le réservoir du conduit et obtenir d'un côté un réservoir avec une partie du goulot muni d'une bague saillante, et de l'autre côté le conduit muni de l'autre partie du goulot muni de l'autre bague saillante,
- remplacement éventuel du réservoir ou du conduit munis de leurs parties de goulot respectives par un autre réservoir ou un autre conduit semblable muni d'une partie semblable de goulot,
- solidarisation du réservoir avec sa partie de goulot ou du réservoir de remplacement avec sa partie de goulot avec respectivement le conduit muni de sa partie de goulot ou avec le conduit de remplacement avec sa partie de goulot par un manchon extérieur venant coiffer les deux parties de goulot, ledit manchon étant fixé en position sur le manchon par des moyens de maintien coopérant avec chacune des bagues.

Avec le procédé de l'invention, on peut donc démonter le réservoir puis le remonter (par exemple pour atteindre un autre composant disposé « derrière » le réservoir et difficile d'accès, ou pour remplacer ou vérifier le fonctionnement d'une pompe équipant le réservoir) en assurant en seconde monte un remontage avec un raccordement aussi robuste que le raccordement initial, en venant « réassocier » les deux parties de goulot par un manchon extérieur, grâce aux bagues saillantes initialement prévues sur le goulot. On peut aussi remplacer un réservoir défectueux, ou un conduit défectueux par cette technique.

De préférence, les moyens de maintien sont des colliers de serrage disposés sur le manchon au voisinage de chacune des bagues en dehors de la zone se trouvant entre les deux bagues.

De préférence, le manchon est choisi en matériau élastomère, notamment choisi parmi l'un au moins des polymères suivants: fluorocarbure, copolymères butadiène- acrylonitrile, chlorure de polyvinyle. Il présente ainsi la compressibilité suffisante pour être maintenu en place par serrage par des colliers, et assurer l'étanchéité du raccordement.

Avantageusement, le réservoir, le conduit et le goulot comprennent une ou des polyoléfines, notamment du polyéthylène, de préférence du polyéthylène haute densité.

D'autres caractéristiques et avantages de l'invention apparaîtront à la lecture de la description détaillée qui suit d'un mode de réalisation de l'invention, donné à titre d'exemple uniquement et en référence aux dessins qui montrent :
- figure 1, une vue en coupe d'un raccordement entre un réservoir et un conduit selon l'invention;
- figure 2, la même vue en coupe, avec la matérialisation des découpes pour effectuer un démontage ou un remplacement du réservoir ou du conduit;
- figure 3, la même vue en coupe après découpes;
- figure 4, la vue du nouveau raccordement après découpe et remontage/remplacement.

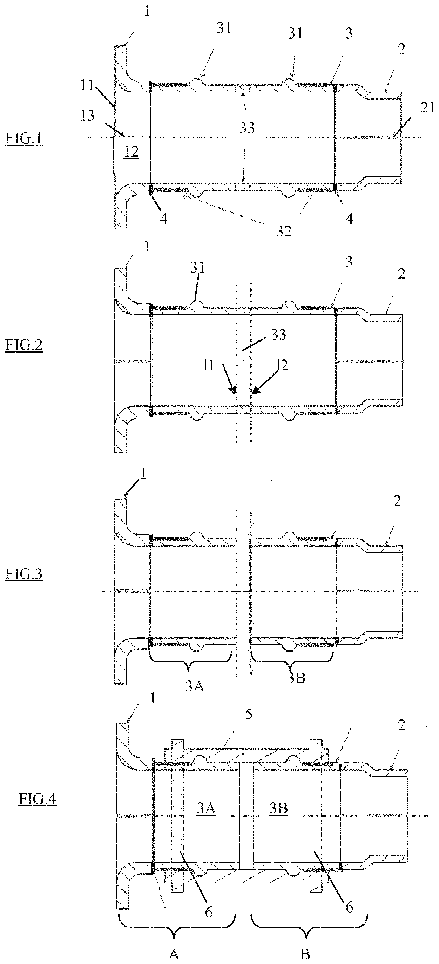

Ces figures sont extrêmement schématiques et ne respectent pas nécessairement l'échelle pour plus de clarté. Les références identiques d'une figure à l'autre correspondent aux mêmes éléments, qui ne seront donc pas décrits deux fois. Toutes les références de la figure 1 ne sont pas reprises dans les figures suivantes pour en simplifier la lecture.

La figure 1 représente en coupe longitudinale le raccordement d'un réservoir de carburant 1 d'un véhicule automobile à une conduite 2. Le réservoir n'est représenté que dans la zone de son ouverture 11 se prolongeant par un embout 12 définissant sur une courte longueur une paroi de section cylindrique.

Le réservoir 1 et son embout 12 sont en polyéthylène haute densité (connu sous l'acronyme PEHD). Ils sont produits par moulage par soufflage, de façon connue en soi, ce qui crée ce qu'on appelle un plan de joint 13, se présentant comme une sorte de bavure issue directement de cette technique de moulage.

Alternativement, le réservoir peut être fait d'une superposition de couches de polymère, appelée « multi couches » et obtenu par extrusion soufflage, là aussi de façon connue.

Le conduit 2 est aussi de PEHD, et également obtenu par moulage en soufflage, avec également un plan de joint 21 du fait de son procédé de fabrication. Il est de section cylindrique, substantiellement du même diamètre que celui de l'embout 12.

On vient raccorder, en première monte, le réservoir 1 au conduit 2 par un goulot 3 également en PEHD. Le goulot est une portion de conduite de section également cylindrique et substantiellement de mêmes dimensions que celles de l'embout 12 et du conduit 2. Le goulot présente deux bagues saillantes 31 de matière avec lui. Ce sont des excroissances saillantes uniquement vers l'extérieur du goulot, faisant tout le tout du goulot (section transversale selon la section transversale du goulot en forme d'anneau), et, en section selon la longueur du goulot, de forme sensiblement arrondie. Le goulot et les bagues sont moulés par injection, procédé ne laissant pas de bavure de type plan de joint.

Le raccordement se fait par deux soudures à chaud 4, l'une entre le goulot 3 et l'embout 12 du réservoir, l'autre entre le goulot 3 et l'extrémité du conduit 2. Les zones 32 du goulot définissent des zones d'étanchéité, sans bavure /plan de joint sur son pourtour extérieur. On note sur le pourtour extérieur du goulot, entre les deux bagues 31, une zone centrale 33 délimitée à la figure par deux lignes pointillées qui font tout le tour de sa section extérieure, et qui peuvent effectivement être matérialisées par des lignes visibles, en relief (en creux ou saillantes) ou pas en relief, ou ne pas être matérialisées du tout (mais figurer, par exemple, dans des guides de montage des composants).

La figure 2 représente les mêmes composants, avec la représentation de deux découpes selon les lignes en pointillés l1 et l2 qui doivent être faites pour réaliser, en seconde monte, la séparation du réservoir 1 avec le conduit 2. Alternativement, on peut ne faire qu'une seule découpe au milieu de la zone 33.

La figure 3 représente les mêmes composants après les découpes selon les lignes l1 et l2. Ces découpes peuvent se faire par un outil de découpe manipulé par un opérateur. On obtient alors d'un côté une partie A comprenant le réservoir 1, son embout 12 et une portion de la goulotte 3A munie d'une bague saillante 31, et, de l'autre une partie B comprenant le conduit 2 et sa portion de goulotte 3B munie de l'autre bague saillante 31.

Ensuite, on peut, soit procéder au remontage des mêmes éléments, soit remplacer la partie A par une partie A' (non représentée) identique mais comprenant un réservoir neuf (si le précédent était défectueux) ou remplacer la partie B par une partie B' (non représentée) avec un conduit 2 neuf (si le précédent était défectueux).

En prenant ici l'exemple d'un remontage des mêmes éléments, la figure 4 représente la façon de raccorder à nouveau le réservoir au conduit : On vient rapporter un manchon 5 en élastomère, à base de fluorocarbure, en insérant en force, à chacune de ses extrémités, les extrémités en regard des deux parties de goulotte 3A et 3B, de façon à ce que le manchon les recouvre presque entièrement. Puis le manchon 5 est maintenu en place par serrage avec deux colliers de serrage 6 qui viennent enserrer le manchon 5 au-delà des deux bagues saillantes 31, c'est-à-dire entre chacune des bagues 31 et l'extrémité de la partie de goulot à laquelle elle appartient et soudée respectivement à l'embout 12 du réservoir 1 et au conduit 2. Les colliers de serrage 6 sont ici métalliques, en acier, inox, ou alliage des deux (avec chrome et nickel). On préserve ainsi l'étanchéité du raccordement, les bagues coopérant avec les colliers pour plaquer le manchon contre les parties de goulot 3A et 3B. On voit qu'une fois les composants à nouveau raccordés, les deux parties de goulot 3A et 3B sont en regard, et distants d'un espace correspondant à la partie centrale 33 du goulot qui a été supprimée lors des découpes (figure 2).

Alternativement, on peut utiliser un manchon 5 à base de copolymères butadiène-acrylonitrile, chlorure de polyvinyle. Alternativement, le manchon peut recouvrir entièrement les parties de goulot 3A et 3b. Le manchon est à positionner sur le goulot uniquement de préférence. La longueur du manchon est donc à adapter à la longueur du goulot.

L'invention permet donc, en seconde monte, de dépasser les inconvénients de la technique de moulage par soufflage grâce à cette pièce de raccord intermédiaire 3. Cette pièce assure ainsi un raccordement étanche et robuste en première monte, mais aussi en seconde monte, par découpe puis utilisation conjointe d'un manchon et des parties restantes de la pièce intermédiaire de raccord initial, sans avoir à différencier entre les composants pour première monte et les composants pour seconde monte, ce qui est, en termes de fabrication et de logistique des pièces détachées, très avantageux.

L'invention s'applique également de façon analogue à d'autres types de raccordements, comme par exemple le raccordement entre deux réservoirs ou celui entre deux conduits.

L'exemple de l'invention décrit à l'aide des figures utilise un goulot 3 qui est initialement monobloc, puis découpé en cas de démontage. La figure 3 peut aussi permettre d'illustrer une variante de l'invention, où le goulot est initialement en plusieurs parties 3A et 3B. Dès la première monte, on peut donc solidariser la partie de goulot 3A avec l'ouverture du réservoir 1 par soudure, solidariser la partie de goulot 3B avec le conduit 2, puis solidariser les parties 3A et 3B entre elles par soudure également. L'invention s'applique donc aussi aux goulots en plusieurs parties qu'on vient assembler lors de la première monte notamment, les différentes parties étant disposées de préférence succesivement selon l'axe longitudinal du goulot.

## Revendications

1. Ensemble comprenant un réservoir de fluide (1) muni d'une ouverture (11,12), un conduit (2) et un dispositif de raccordement de ladite ouverture audit conduit, ledit dispositif de raccordement comprenant un goulot (3) soudé à l'une de ses extrémités à l'ouverture (11,12) du réservoir (1) et à l'autre extrémité au conduit (2), ledit goulot (3) étant muni de deux bagues saillantes (31) sur son pourtour extérieur, et étant sécable dans une zone de découpe (33) située entre les deux bagues et identifiée par marquage.

2. Ensemble selon la revendication précédente, **caractérisé en ce que** les bagues saillantes (31) sont de matière avec le goulot ou rapportées sur lui.

3. Ensemble selon l'une des revendications précédentes, **caractérisé en ce que** le goulot (3) est monobloc ou en plusieurs parties assemblées.

4. Ensemble selon l'une des revendications précédentes, **caractérisé en ce que** le conduit (2), le réservoir (1) et le goulot (3) sont à base de matériaux polymères, notamment en thermoplastique(s) du type polyoléfine(s), notamment en polyéthylène.

5. Ensemble selon l'une des revendications 1 à 4, **caractérisé en ce que** le réservoir (1) et le conduit (2) sont à base de matériaux thermoplastiques et obtenus par un moulage par soufflage ou extrusion soufflage, et **en ce que** le goulot (3) est en matériau polymère thermoformable obtenu par un moulage par injection.

6. Procédé de traitement d'un ensemble comprenant un réservoir (1) muni d'une ouverture (11,12) et un conduit (1), ledit conduit et ladite ouverture étant raccordés par un dispositif de raccordement comprenant un goulot (3) soudé à l'une de ses extrémités à l'ouverture du réservoir et à l'autre de ses extrémités au conduit, ledit goulot est muni de deux bagues saillantes (31) sur son pourtour extérieur, ledit goulot est sécable en deux parties dans une zone dite de découpe (33) située entre les deux bagues saillantes, et en vue de remplacer le réservoir ou le conduit ou de remonter le réservoir sur le conduit, après démontage, ledit procédé comprend les étapes suivantes :
- découpe du goulot du dispositif de raccordement dans sa zone de découpe afin de séparer le réservoir (1) du conduit (2) et obtenir d'un côté un réservoir avec une partie du goulot (3A) muni d'une bague saillante (31), et de l'autre côté le conduit (2) muni de l'autre partie du goulot (3B) muni de l'autre bague saillante (31),
- remplacement éventuel du réservoir ou du conduit munis de leurs parties de goulot respectives par un autre réservoir ou un autre conduit semblable muni d'une partie semblable de goulot,
- solidarisation du réservoir (1) avec sa partie de goulot (3A) ou du réservoir de remplacement avec sa partie de goulot avec respectivement le conduit (2) muni de sa partie de goulot (3B) ou avec le conduit de remplacement avec sa partie de goulot par un manchon extérieur (5) venant coiffer les deux parties de goulot, ledit manchon étant fixé en position sur le manchon par des moyens de maintien (6) coopérant avec chacune des bagues (31).

7. Procédé selon la revendication précédente, **caractérisé en ce que** les moyens de maintien sont des colliers de serrage (6) disposés sur le manchon au voisinage de chacune des bagues (31) en dehors de la zone se trouvant entre les deux bagues.

8. Procédé selon la revendication précédente, **caractérisé en ce que** le manchon est choisi en matériau élastomère, notamment choisi parmi l'un au moins des polymères suivants : fluorocarbure, copolymères butadiène-acrylonitrile, chlorure de polyvinyle.

## Patentansprüche

1. Baugruppe, die einen Flüssigkeitsbehälter (1) umfasst, der mit einer Öffnung (11, 12), einer Leitung (2) und einer Vorrichtung zum Anschließen der Öffnung an der Leitung versehen ist, wobei die Anschlussvorrichtung einen Hals (3) umfasst, der an einem seiner Enden an die Öffnung (11, 12) des Behälters (1) und an dem anderen Ende an die Leitung (2) geschweißt ist, wobei der Hals (3) mit zwei vorstehenden Ringen (31) auf seinem Außenumfang versehen und durch Kennzeichnung identifiziert ist.

2. Baugruppe nach dem vorhergehenden Anspruch, **dadurch gekennzeichnet, dass** die vorstehenden Ringe (31) aus einem Stück mit dem Hals oder an ihn angebaut sind.

3. Baugruppe nach einem der vorhergehenden Ansprüche, **dadurch gekennzeichnet, dass** der Hals (3) einstückig oder aus mehreren zusammengefügten Teilen ist.

4. Baugruppe nach einem der vorhergehenden Ansprüche, **dadurch gekennzeichnet, dass** die Leitung (2), der Behälter (1) und der Hals (3) auf der Basis von Polymermaterialien, insbesondere Thermoplast(en) des Typs Polyolefinen(e), insbesondere aus Polyäthylen sind.

5. Baugruppe nach einem der Ansprüche 1 bis 4, **dadurch gekennzeichnet, dass** der Behälter (1) und die Leitung (2) auf der Basis von Thermoplastmaterialien sind und durch einen Formen durch Blasen oder Extrusionsblasen erhalten werden, und dass der Hals (3) aus wärmeformenbarem Polymermaterial besteht, das durch Spritzguss erhalten wird.

6. Verfahren zur Behandlung einer Baugruppe, die einen Behälter (1) umfasst, der mit einer Öffnung (11, 12) und einer Leitung (1) versehen ist, wobei die Leitung und die Öffnung durch eine Anschlussvorrichtung angeschlossen sind, die einen Hals (3) umfasst, der an einem seiner Enden an die Öffnung des Behälters und an dem anderen seiner Enden an die Leitung geschweißt ist, wobei der Hals mit zwei vorstehenden Ringen (31) auf seinem Außenumfang versehen ist, wobei der Hals in zwei Teile in einer Zone, Schnittzone (33) genannt, die zwischen den zwei vorstehenden Ringen liegt, teilbar ist und um den Behälter oder die Leitung zu ersetzen oder den Behälter nach einer Demontage wieder auf die Leitung zu montieren, wobei das Verfahren die folgenden Schritte umfasst:
- Schneiden des Halses der Anschlussvorrichtung in der Schnittzone, um den Behälter (1) von der Leitung (2) zu trennen und auf einer Seite einen Behälter mit einem Teil des Halses (3A), der mit einem vorstehenden Ring (31) versehen ist, und auf der anderen Seite die Leitung (2), die mit dem anderen Teil des Halses (3B) versehen ist, die mit dem anderen vorstehenden Ring (31) versehen ist, zu erhalten,
- eventuelles Ersetzen des Behälters oder der Leitung, die mit ihren jeweiligen Halsteilen versehen sind, durch einen anderen Behälter oder eine andere ähnliche Leitung, die mit einem ähnlichen Halsteil versehen ist,
- festes Verbinden des Behälters (1) mit seinem Halsteil (3A) oder des Ersatzbehälters mit seinem Halsteil jeweils mit der Leitung (2), die mit ihrem Halsteil (3B) versehen ist, oder mit der Ersatzleitung mit ihrem Halsteil, durch eine äußere Hülse (5), die auf den zwei Halsteilen sitzt, wobei die Hülse auf der Hülse durch Haltemittel (6), die mit jedem der Ringe (31) zusammenwirken, in Position befestigt ist.

7. Verfahren nach dem vorhergehenden Anspruch, **dadurch gekennzeichnet, dass** die Haltemittel Spannschellen (6) sind, die auf der Hülse in der Nähe jedes der Ringe (31) außerhalb der Zone, die sich zwischen den zwei Ringen befindet, angeordnet sind.

8. Verfahren nach dem vorhergehenden Anspruch, **dadurch gekennzeichnet, dass** die Hülse aus einem Elastomermaterial ausgewählt ist, insbesondere aus einem der folgenden Polymere: Fluorcarbon, Butadien-Acrylnitril-Copolymere, Polyvinylchlorid.

## Claims

1. An assembly including a fluid reservoir (1) provided with an opening (11, 12), a pipe (2) and a connection device of said opening to said pipe, said connection device including a neck (3) welded at one of its ends to the opening (11, 12) of the reservoir (1) and at the other end to the pipe (2), said neck (3) being provided with two projecting rings (31) on its exterior periphery, and being divisible in a cutting zone (33) situated between the two rings and identified by marking.

2. The assembly according to the preceding claim, **characterized in that** the projecting rings (31) are integrally formed with the neck or are fixed thereon.

3. The assembly according to one of the preceding claims, **characterized in that** the neck (3) is in one piece or is made up of several assembled parts.

4. The assembly according to one of the preceding claims, **characterized in that** the pipe (2), the reservoir (1) and the neck (3) are based on polymer materials, in particular thermoplastic(s) of the polyolefin(s) type, in particular polyethylene.

5. The assembly according to one of Claims 1 to 4, **characterized in that** the reservoir (1) and the pipe (2) are based on thermoplastic materials and are obtained by a blow moulding or extrusion blowing, and **in that** the neck (3) is made of a thermoformable polymer material obtained by an injection moulding.

6. A method for processing an assembly including a reservoir (1) provided with an opening (11, 12) and a pipe (1), said pipe and said opening being connected by a connection device including a neck (3) welded at one of its ends to the opening of the reservoir and at the other of its ends to the pipe, said neck is provided with two projecting rings (31) on its exterior periphery, said neck is divisible into two parts in a zone designated a cutting zone (33) situated between the two projecting rings, and for the purpose of replacing the reservoir or the pipe or to remount the reservoir on the pipe, after dismantling, said method includes the following steps:
- cutting of the neck of the connection device in its cutting zone so as to separate the reservoir (1) from the pipe (2) and to obtain on one side a reservoir with a part of the neck (3A) provided with a projecting ring (31), and on the other side the pipe (2) provided with the other part of the neck (3B) provided with the projecting ring (31),
- possible replacement of the reservoir or of the pipe, provided with their respective neck parts, by another similar reservoir or another pipe provided with a similar neck part,
- attachment of the reservoir (1) with its neck part (3A) or of the replacement reservoir with its neck part with respectively the pipe (2) provided with its neck part (3B) or with the replacement pipe with its neck part by an exterior sleeve (5) coming to cover the two neck parts, said sleeve being fixed in position on the sleeve by retaining means (6) cooperating with each of the rings (31).

7. The method according to the preceding claim, **characterized in that** the retaining means are clamping collars (6) disposed on the sleeve in the vicinity of each of the rings (31) outside the zone situated between the two rings.

8. The method according to the preceding claim, **characterized in that** the sleeve is selected from elastomer material, in particular selected from at least one of the following polymers: fluorocarbon, butadiene/acrylonitrile copolymers, polyvinyl chloride.
